# EUROPÄISCHE PATENTSCHRIFT

(11) **EP 2 339 818 B1**
(45) Veröffentlichungstag und Bekanntmachung des Hinweises auf die Patenterteilung: **08.02.2017**
(21) Anmeldenummer: 10015973.0
(22) Anmeldetag: 22.12.2010
(51) Int. Cl.: H04L 29/14, H04M 3/12, H04M 3/22, H04L 29/06

(54) **Verfahren und Vorrichtung zum Bereitstellen eines Telekommunikationsdienstes**
Method and device for providing a telecommunications service
Procédé et dispositif destinés à préparer un service de télécommunication

(30) Priorität: 23.12.2009 DE 102009060332
(43) Veröffentlichungstag der Anmeldung: 29.06.2011
(73) Patentinhaber: Telefónica Germany GmbH & Co. OHG, 80992 München (DE)
(72) Erfinder: Soulimane, Tinfissi, 82178 Puchheim (DE); Franzl, Andreas, 84405 Dorfen (DE)
(74) Vertreter: Herrmann, Uwe

(56) Entgegenhaltungen:
- WO-A1-2005/069140
- Acme Packet, Inc.: "Acme Packet session border controllers in the contact center", White papers Acme Packet , 1. Oktober 2008 (2008-10-01), Seiten 1-10, XP002630468, USA Gefunden im Internet: URL:http://www.ucstrategies.com/uploadedFi les/UC_Information/White_Papers/Acme_Packe t/APKT_WP_SBC_contactcenter_081003.pdf [gefunden am 2011-03-28]
- MeritVoice: "Advanced Communications System, Communication Applications Complex Distributed Switching System", CMerit Network, Inc. , 1. Januar 2008 (2008-01-01), Seiten 1-26, XP002630469, Michigan Gefunden im Internet: URL:http://www.merit.edu/documents/pdf/ser vices/meritvoice/advancedcommsystem.pdf [gefunden am 2011-03-28]

## Beschreibung

Die vorliegende Erfindung betrifft ein Verfahren zum Bereitstellen eines Telekommunikationsdienstes, insbesondere zum Betrieb mindestens eines Callcenters. Eingehende Telefonanrufe aus einem VolP-Netz werden über mindestens einen Session Border Controller in einer ersten Betriebsweise mittelbar über ein Primärsystem an wenigstens einen Anruf-Manager signalisiert.

Ferner bezieht sich die vorliegende Erfindung auf ein Telekommunikationssystem zur Durchführung eines derartigen Verfahrens.

Vorrichtungen bzw. Verfahren dieser Art dienen zum Bereitstellen eines Netzanbieterdienstes in Form eines Callcenters zur Annahme telefonischer Kundenanfragen aus einem bestehenden beliebigen VolP-/IP-Netz. Am Netzübergang zwischen dem VolP-Netz und der Infrastruktur des Netzanbieters werden sogenannte Session Border Controller (SBC) genutzt, um die Signalisierungs- und Medienströme zu kontrollieren, die beim Aufbau, beim Führen und beim Abbau von Rufverbindungen eine Rolle spielen. Insbesondere leiten die Session Border Controller eingehende Telefonanrufe an ein Primärsystem weiter, das die Anfrage bzw. den Anruf an den zuständigen Anruf-Manager eines Anruf-Manager-Clusters weiterreicht. Die Zustellung der Anfrage bzw. des Anruf wird dienstspezifisch an den vorgesehenen Mitarbeiter des Callcenters weitergeleitet. Das Primärsystem bietet ferner die Möglichkeit, die eingehenden Anrufe mit servicespezifischen Funktionen bzw. Diensten abzuarbeiten. Beispielsweise lassen sich je nach angefragtem Dienst benutzerdefinierte Begrüßungs- sowie Wartemelodien einspielen. Weiterhin tragen Auswertemodule des Primärsystems zur Erstellung einer Statistik bezüglich der Anzahl an eingehenden und bearbeiteten Anrufe bei.

Die Dokumente XP002630468, sowie WO 2005/069140 stellen in diesem Zusammenhang relevanten Stand der Technik dar.

Nachteilig an der vorgenannten Realisierung eines Callcenters ist jedoch, dass die Instabilität bzw. der Ausfall des Primärsystems zum Stillstand des gesamten Callcenters des Netzbetreibers führt. Für den Fall, dass das Primärsystem ausgefallen ist, wird auf dem Anruf-Manager-Cluster ein sogenanntes Huntlist-Routing eingerichtet. Eingehende Kundenanrufe werden an die für die jeweiligen Dienste eingetragenen Telefone der Callcenterstandorte signalisiert. Diese Notfalllösung bietet keine Möglichkeit zur Einspielung benutzerdefinierter Begrüßungs- und Wartemelodien sowie zur Erfassung und Analyse der Anzahl an eingehenden und bearbeiteten Anrufen. Dieser Punkt ist insofern wichtig, da er die Grundlage für die Abrechnung der extern ausgegliederten Callcenter darstellt.

Aufgabe der vorliegenden Erfindung ist es daher, einen Telekommunikationsdienst, insbesondere einen Callcenterbetrieb zu entwickeln, das einen Ausfall bestimmter Komponenten des Telekommunikationssystems zumindest teilweise adäquat kompensiert und einen Normalbetrieb gewährleistet.

Erfindungsgemäß wird diese Aufgabe zunächst durch ein Verfahren zum Bereitstellen eines Telekommunikationsdienstes, insbesondere zum Betrieb mindestens eines Callcenters gemäß dem Anspruch 1 gelöst. Entsprechend dem erfindungsgemäßen Verfahren werden eingehende Telefonanrufe aus einem VolP-Netz über mindestens einen Session Border Controller (SBC) in einer ersten Betriebsweise mittelbar, d.h. über ein Primärsystem an wenigstens einen Anruf-Manager signalisiert. Erfindungsgemäß wird in einer zweiten Betriebsweise ein alternativer Kommunikationsweg konfiguriert, in dem die eingehenden Telefonanrufe durch den Session Border Controller unmittelbar ohne Einbeziehung des Primärsystems an wenigstens einen Anruf-Manager signalisiert werden.

Demnach wird durch die zweite Betriebsweise die Anrufverteilung des Primärsystems vollständig ausgespart. Der Service Border Controller übernimmt zumindest teilweise die Funktionalität des Primärsystems und leitet alle eingehenden Anrufe des VolP-Netzes direkt an den Anruf-Manager weiter. Der Anruf-Manager ist bevorzugt als Cluster einer Vielzahl von Anruf-Managern realisiert, wobei jeder Anruf-Manager einem spezifischen Dienst des Callcenters zugewiesen ist. In der ersten Betriebsweise übernimmt demnach das Primärsystem die dienstspezifische Anrufverteilung der eingehenden Anrufe an die zugeordneten Anruf-Manager des Clusters. Diese Funktion wird in der zweiten Betriebsweise vollständig mittels wenigstens eines Session Border Controllers erfüllt.

Gemäß einer vorteilhaften Ausgestaltung des Verfahrens wird der alternative Kommunikationsweg der zweiten Betriebsweise bei Ausfall des Primärsystems automatisch oder manuell konfiguriert. Der Regelbetrieb des Verfahrens sieht die Verarbeitung und Anrufverteilung der eingehenden Anrufe mittels des Primärsystems vor. Nur bei Ausfall des Primärsystems kann ersatzweise automatisch eine Umkonfigurierung des Systems zum Notfallbetrieb erfolgen. Selbstverständlich lässt sich der alternative Kommunikationsweg auch manuell per Benutzereingabe konfigurieren.

Vorteilhaft ist es, wenn die Konfiguration des alternativen Kommunikationsweges in einer oder mehreren Konfigurationsdateien im Session Border Controller oder in einer Einheit, die damit in Verbindung steht, hinterlegt ist. Mögliche Notfallstrategien bzw. alternative Strategien zur Umgehung des Primärsystems können vor oder während des Betriebs des Telekommunikationsdienstes definiert werden und anhand von Konfigurationsdateien im Service Border Controller hinterlegt werden. Bevorzugt ist der Zugriff auf die Konfigurationsdateien zur Änderung bzw. Erweiterung während des Laufzeitbetriebs des Telekommunikationsdienstes zulässig.

Damit der Betrieb des Telekommunikationsdienstes bezüglich Qualität und Umfang nach Ausfall des Primärsystems nicht oder nur geringfügig eingeschränkt wird, kann es vorgesehen sein, dass der Session Border Controller dienstspezifische Funktionen und/oder Auswertefunktionen des Primärsystems für die eingehenden Anrufe übernimmt. Die Implementierung der Funktionen innerhalb des Session Border Controllers entspricht im Wesentlichen dem Funktionsumfang des Primärsystems. Beispielsweise sehen die dienstspezifischen Funktionen des Session Border Controllers die Einspielung definierter Begrüßungs- oder Wartemelodien vor, wobei deren Anwendung in Abhängigkeit der gestellten Kundenanfrage erfolgt. Ferner lassen sich bestimmte Funktionen für dienstspezifische Notfalldienste und/oder dienstspezifische Öffnungszeiten und/oder dienstspezifische Disconnect-Ansagen auf die eingehenden Anrufe anwenden. Von Vorteil ist die mögliche Konfiguration einer maximal zulässigen Wartezeit pro Anruf. Bevorzugt sieht der Session Border Controller eine Auswertefunktion vor, die eine Statistikerhebung über die Anzahl an eingegangenen und bearbeiteten Anrufen erlaubt. Unter den bearbeiteten Anrufen sind die erfüllten Kundenanfragen zu verstehen.

Da die erste und zweite Betriebsweise des Verfahrens im Wesentlichen identische Grundfuktionen erfüllen sollen, ist es zweckmäßig, dass die Konfigurationen des Primärsystems sowie des Session Border Controllers während des Laufzeitbetriebs synchronisiert werden. Besonders bevorzugt erfolgt die Synchronisation zyklisch. Dadurch ist es gewährleistet, dass vorgenommene Änderungen an der Konfiguration des Primärsystems in die Konfiguration des Session Border Controllers übertragen werden.

Es ist denkbar, dass der Anruf-Manager die eingehenden Anrufe an einen oder mehrere Callcenterstandorte weiterleitet. Dabei spielt es keine Rolle, ob die eingehenden Anrufe aus dem VolP-Netz durch den Session Border Controller mittelbar über das Primärsystem oder unmittelbar direkt an den Anruf-Manager signalisiert werden. Der Anruf-Manager vereint ein oder mehrere Callcenterstandorte zu einem gemeinsamen Callcenter.

Um erforderliche Konfigurationseingaben am Session Border Controller nicht lokal vornehmen zu müssen, kann es zweckmäßig sein, dass die Konfiguration wenigstens eines Session Border Controllers über ein Fernkonfigurationsmittel erfolgt. Das Fernkonfigurationsmittel steht stellvertretend für die Realisierung eines dezentralen Zugriffverfahrens auf wenigstens einen Session Border Controller.

Erfindungsgemäß wird die eingangs genannte Aufgabe durch ein Telekommunikationssystem zur Durchführung des erfindungsgemäßen Verfahrens gemäß Anspruch 8 gelöst. Das Telekommunikationssystem umfasst wenigstens einen Session Border Controller, ein Primärsystem und wenigstens einen Anruf-Manager. Bevorzugt ist der Anruf-Manager Teil eines Anruf-Manager-Clusters. Zur Umsetzung der möglichen Konfigurationsvarianten einer ersten oder zweiten Betriebsweise des Telekommunikationssystems weist der Session Border Controller wenigstens eine Logik auf bzw. steht mit dieser Logik in Verbindung, so dass entweder eine mittelbare oder eine unmittelbare Signalisierung der eingehenden Anrufe aus dem VoIP-Netz an den Anruf-Manager möglich ist. Die Logik beinhaltet somit die Übernahme einzelner oder aller Funktionen des Primärsystems.

Vorteilhafterweise weist die Logik des Session Border Controllers ein Mittel zur Ausführung dienstspezifischer Funktionen auf. Die eingehenden Anrufe lassen sich mit dienstspezifischen Begrüßungs- bzw. Wartemelodien belegen oder es können alternativ definierbare Ansagen zur Kundgebung der Öffnungszeiten oder dergleichen eingespielt werden. Ferner bietet die Logik des Session Border Controllers ein Mittel zur Erhebung einer Statistik bezüglich eingegangener und bearbeiteter Anrufe.

Weitere Merkmale, Einzelheiten und Vorteile der Erfindung werden nun anhand eines in den Zeichnungen dargestellten Ausführungsbeispiels näher erläutert. Es zeigen:
- Figur 1:: ein Telekommunikationssystem zum Betrieb eines Callcenters gemäß dem Stand der Technik und
- Figur 2:: das erfindungsgemäße Telekommunikationssystem zum Betrieb eines Callcenters.

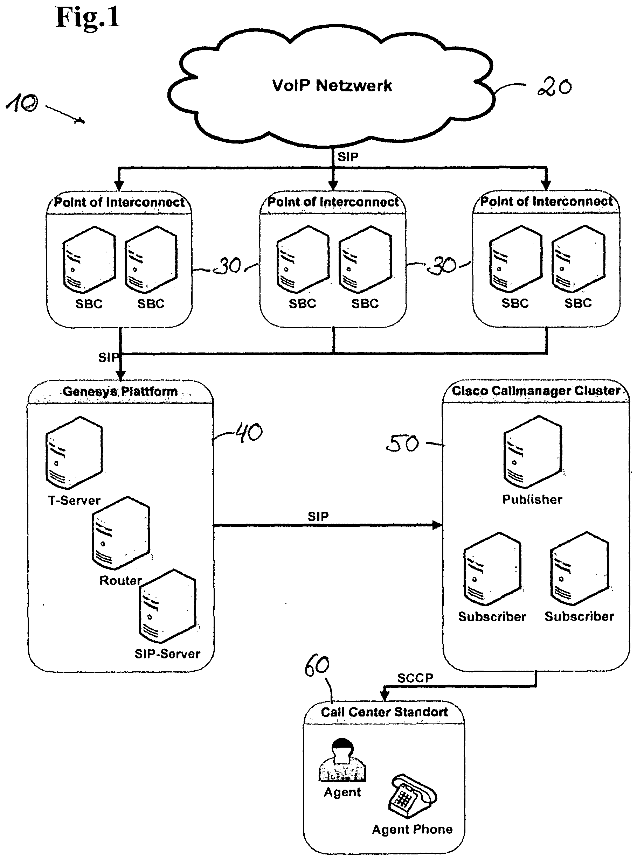

Figur 1 zeigt exemplarisch die Infrastruktur eines aus dem Stand der Technik bekannten Telekommunikationssystems 10 zum Betrieb eines Callcenters. Die wesentliche Funktionsweise des Telekommunikationssystems 10 besteht darin, die eingehenden Anrufe, die einen bestimmten Dienst eines Netzanbieters in Anspruch nehmen, auszuwerten und gemäß definierter Vorgaben zu verarbeiten und an die zuständigen Bearbeiter der Callcenterstandorte 60 weiterzuleiten.

Wie in Figur 1 gezeigt, umfasst das Telekommunikationssystem 10 mehrere Session Border Controller 30, die den Grenzübergang des Telekommunikationssystems 10 des Netzanbieters zum öffentlichen VoIP-Netzwerk 20 darstellen. Dabei arbeiten die Session Border Controller 30 als Netzknotenübergangspunkte, die eine eingehende und abgehende SIP-Kommunikation zwischen dem Telekommunikationssystem 10 und dem öffentlichen VoIP-Netzwerk 20 ermöglichen. Sämtliche eingehende Anrufe werden auf Basis des SIP-Protokolls durch die Session Border Controller 30 an das Primärsystem 40 des Telekommunikationssystems 10 weitergeleitet.

Das Primärsystem 40 dient zur Aufteilung der eingehenden Anrufe bzw. der eingehenden Kundenanfragen auf unterschiedliche Dienstbereiche. Die Einheit 50 stellt ein Cluster von diversen Anruf-Managern dar, die bekannte Funktionen einer modernen IP-Telefonanlage umsetzen. Die einzelnen Anruf-Manager sind definierten Diensten des Callcenters zugeordnet.

Das Primärsystem 40 analysiert die eingehenden Anrufe und weist diese dem passenden dienstspezifischen Anruf-Manager des Clusters 50 zu. Ferner sorgt das Primärsystem 40 dafür, dass gemäß dem angeforderten Dienst des eingehenden Anrufs eine benutzerdefinierte Begrüßungs- bzw. Wartemelodie eingespielt wird.

Weiterhin ist eine Funktion zur Erstellung einer Anrufstatistik implementiert, die Aussagen über die Anzahl der eingegangenen Anrufe sowie die Anzahl der durch die Mitarbeiter der Callcenterstandorte 60 bearbeiteten Anrufe zuläßt. Die Anruf-Manager des Cluster 50 verwalten die einzelnen Bearbeiteranschlüsse der Callcentermitarbeiter an verschiedenen Callcenterstandorten 60 und weisen gemäß entsprechender Vorgaben den eingehenden Anrufen einen bestimmten Mitarbeiter des Callcenterstandorts 60 zu.

Die aus dem Stand der Technik bekannte Lösung des Telekommunikationssystems 10 gemäß Figur 1 sieht vor, dass bei einem Ausfall des Primärsystems 40 auf ein zuvor im Cluster 50 eingerichtetes Huntlist-Routing zurückgegriffen wird. In diesem Szenario werden sämtliche eingehende Kundenanrufe an die für den jeweiligen Dienst eingetragenen Telefone der Callcenterstandorte 60 signalisiert. Eine derartige Notlösung verhindert zwar den Totalausfall des Callcenters, jedoch führt die Notlösung zu massiven Einschränkungen im Betrieb des Callcenters. Auf die Einspielung von benutzerdefinierten Begrüßungs- und Wartemelodien muss vollständig verzichtet werden. Ferner besteht keine Möglichkeit, eine Statistik bezüglich der eingegangenen und abgearbeiteten Anrufe zu erheben. Dieser Punkt ist insofern wichtig, da er die Grundlage für die Abrechnung der Outsourcing-Callcenter darstellt.

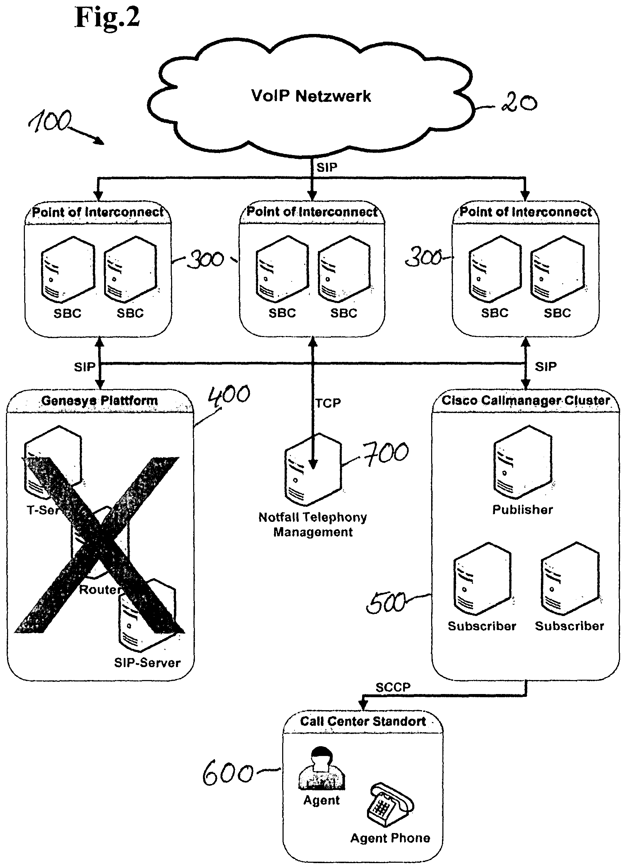

Figur 2 zeigt das erfindungsgemäße Telekommunikationssystem 100, das in der Lage ist, die Kundenanrufe auf einem alternativen Kommunikationsweg zu einem Bearbeiter eines Callcenterstandorts 600 durchzustellen. Dies entspricht einer implementierten Lösung, die trotz Ausfall des Primärsystems 400 den Callcenterbetrieb sicherstellt.

Die erste Betriebsweise des erfindungsgemäßen Telekommunikationssystems 100 erfolgt analog zu dem bekannten Telekommunikationssystem 10 aus Figur 1. Alle eingehenden Telefonanrufe aus dem VolP-Netz 20 werden demnach über mindestens einen Session Border Controller 300 mittelbar über das Primärsystem 400 an wenigstens einen Anruf-Manager des Anruf-Manager-Clusters 500 signalisiert. Der Anruf-Manager des Anruf-Manager-Clusters 500 stellt die eingehenden Anrufe an den zugeordneten Bearbeiter des Callcenterstandorts 600 durch.

Erfindungsgemäß wird ein alternativer Kommunikationsweg der eingehenden Anrufe vom VoIP-Netzwerk 20 zum entsprechenden Bearbeiter des Callcenterstandorts 600 bereitgestellt, der als Notfalllösung fungiert um den Ausfall des Primärsystems 400 zu kompensieren. In der konfigurierbaren zweiten Betriebsweise des Telekommunikationssystems 100 werden alle eingehenden Telefonanrufe durch den Session Border Controller 300 unmittelbar ohne Einbeziehung des Primärsystems 400 an wenigstens einen Anruf-Manager des Anruf-Manager-Clusters 500 signalisiert. Die Anrufverteilung des Primärsystems 400 wird in der zweiten Betriebsweise komplett ausgespart.

Zur Verwirklichung des zweiten Kommunikationsweges dient eine auf der Ebene des Session Border Controllers 300 implementierte Logik. Fällt das Primärsystem 400 aus, so wird automatisch oder manuell auf die Logik des Session Border Controller 300 umgeschaltet. Die Logik bildet zumindest einen Teil der Grundfunktion des Primärsystems 400 ab, so dass ein vollfunktionsfähiger oder nur geringfügig eingeschränkter Betrieb des Callcenters möglich ist. Beispielsweise wird jedem angeforderten Dienst ein zugeordneter Notfalldienst zugeteilt. Ferner sind die Einspielung von dienstspezifischen Begrüßungsansagen, Öffnungsanzeigen, Wartemelodien oder Disconnect-Ansagen denkbar. Darüber hinaus ist eine Konfiguration der maximalen Wartezeit eines eingehenden Anrufs bis zur Weiterleitung an einen Bearbeiter innerhalb des Callcenterstandorts 600 möglich.

Zur Statistikerhebung bietet die implementierte Logik zahlreiche Möglichkeiten zur Auswertung und Analyse der Anzahl an eingehenden und abgearbeiteten Anrufen.

Die Durch- bzw. Ausführung der vorgenannten Funktionen bzw. Merkmale werden durch die in den einzelnen Session Border Controllern 300 festgelegter Konfigurationsdateien definiert. Damit geänderte Konfigurationen des Primärsystems 400 auch während der zweiten Betriebsweise zur Auswirkung kommen, ist es zweckmäßig, eine regelmäßige Synchronisation der Konfiguration von Primärsystemen und Notfalllösung durchzuführen.

Zur Konfiguration der Session Border Controller 300 wird die externe Einheit 700 zur Verfügung gestellt, die über eine TCP-Anbindung Einfluß auf die Konfigurationsdateien bzw. auf die Logik der Session Border Controller 300 nehmen kann.

Hilfreich ist die Implementierung von Funktionen zur Steuerung der Line Group Konfiguration des Anruf-Managers sowie zur Aktivierung bzw. Deaktivierung der Notfallservices über eine graphische Benutzeroberfläche (WebGUI). Von Vorteil ist auch die Umsetzung einer Methode zur An- bzw. Abmeldung an einen Notfallservice über einen Service am Cisco-Phone sowie der Service am Cisco-Phone zum Einleiten eines Transfers über eine PickList. Möglich ist auch eine zentrale Konfiguration des Notfallservices im Konfigurationstool des Primärsystems 400.

## Patentansprüche

1. Verfahren zum Betrieb mindestens eines Callcenters, bei dem eingehende Telefonanrufe aus einem VolP-Netz über mindestens einen Session Border Controller in einer ersten Betriebsweise mittelbar über ein Primärsystem an wenigstens einen Anruf-Manager signalisiert werden,
**dadurch gekennzeichnet,**
**dass** in einer zweiten Betriebsweise ein alternativer Kommunikationsweg konfiguriert wird, in dem die eingehenden Telefonanrufe durch den Session Border Controller unmittelbar ohne Einbeziehung des Primärsystems, welches dienstspezifische Funktionen/Dienste sowie eine statistische Auswertung der eingehenden und/oder bearbeiteten Anrufe bereitstellt, an den wenigstens einen Anruf-Manager signalisiert werden, wobei der Session Boarder Controller zumindest teilweise die Funktionalität des Primärsystems übernimmt.

2. Verfahren nach Anspruch 1, **dadurch gekennzeichnet, dass** der alternative Kommunikationsweg bei Ausfall des Primärsystems automatisch oder manuell konfiguriert wird.

3. Verfahren nach Anspruch 1 oder 2, **dadurch gekennzeichnet, dass** die Konfiguration des alternativen Kommunikationswegs in Konfigurationsdateien im Session Border Controller oder in einer Einheit, die damit in Verbindung steht, abgelegt ist.

4. Verfahren nach einem der Ansprüche 1 bis 3, **dadurch gekennzeichnet, dass** der Session Border Controller dienstspezifische Funktionen und/oder Auswertefunktionen, wie beispielsweise dienstspezifische Notfalldienste und/oder dienstspezifische Begrüßungsansagen und/oder dienstspezifische Öffnungszeiten und/oder dienstspezifische Wartemusik und/oder dienstspezifischen Disconnect-Ansage und/oder Auswertung der Anrufstatistik und/oder Auswertung der Bearbeiterstatistik, für die eingehenden Anrufe anbietet.

5. Verfahren nach einem der Ansprüche 1 bis 4, **dadurch gekennzeichnet, dass** eine Synchronisation der Konfiguration des Primärsystem und der Konfiguration des alternativen Kommunikationswegs durchgeführt wird.

6. Verfahren nach einem der Ansprüche 1 bis 5, **dadurch gekennzeichnet, dass** der Anruf-Manager die eingehenden Anrufe an einen oder mehrere Callcenterstandorte weiterleitet.

7. Verfahren nach einem der Ansprüche 1 bis 6, **dadurch gekennzeichnet, dass** die Konfiguration wenigstens eines Session Border Controllers über ein Fernkonfigurationsmittel erfolgt.

8. Telekommunikationssystem zur Durchführung eines Verfahrens nach einem der Ansprüche 1 bis 7, umfassend ein Primärsystem (400), einen Anruf-Manager und wenigstens einen Session Boarder Controller (300), der eine Logik aufweist oder mit dieser in Verbindung steht, die eine mittelbare Signalisierung eingehender Anrufe an den Anruf-Manager erlaubt,
**dadurch gekennzeichnet,**
**dass** die Logik des wenigstens einen Session Border Contollers (300) eine unmittelbare Signalisierung eingehender Anrufe an den Anruf-Manager erlaubt, wobei der Session Border Controller (300) zumindest teilweise die Funktionalität des Primärsystems, welches dienstspezifische Funktionen/Dienste sowie eine statistische Auswertung der eingehenden und/oder bearbeiteten Anrufe bereitstellt, übernimmt.

9. Telekommunikationssystem nach Anspruch 8, **dadurch gekennzeichnet, dass** die Logik des Session Border Controllers (300) ein Mittel zur Ausführung dienstspezifischer Funktionen und/oder zur Auswertung der Anruf- und/oder Bearbeitungsstatistik aufweist.

10. Telekommunikationssystem nach Anspruch 8 oder 9, **dadurch gekennzeichnet, dass** eine externe Einheit (700) vorgesehen ist, die über ein Transmission Control Protocol (TCP) an wenigstens einen Session Border Controller (300) zur Fernkonfiguration angebunden ist.

## Claims

1. A method of operating at least one call center in which incoming telephone calls from a VoIP network over at least one session border controller are indirectly signaled in a first operating mode via a primary system to at least one call manager,
**characterized in that**
an alternative communications path is configured in a second operating mode in which the incoming telephone calls are signaled to the at least one call manager directly by the session border controller without involving the primary system that provides service-specific functions/services as well as a statistical evaluation of the incoming and/or processed calls, with the session border controller at least partly taking over the function of the primary system.

2. A method in accordance with claim 1, **characterized in that** the alternative communications path is automatically or manually configured on a failure of the primary system.

3. A method in accordance with claim 1 or claim 2, **characterized in that** the configuration of the alternative communications path is stored in configuration files in the session border controller or in a unit that is connected thereto.

4. A method in accordance with one of the claims 1 to 3, **characterized in that** the session border controller provides service-specific functions and/or evaluation functions for the incoming calls such as service-specific emergency services and/or service-specific welcome greetings and/or service-specific opening times and/or service-specific hold music and/or service-specific disconnect messages and/or evaluation of the call statistics and/or evaluation of the processing statistics.

5. A method in accordance with one of the claims 1 to 4, **characterized in that** a synchronization of the configuration of the primary system and of the configuration of the alternative communications path is carried out.

6. A method in accordance with one of the claims 1 to 5, **characterized in that** the call manager forwards the incoming calls to one or more call center locations.

7. A method in accordance with one of the claims 1 to 6, **characterized in that** the configuration of at least one session border controller takes place via remote configuration means.

8. A telecommunications system for carrying out a method in accordance with one of the claims 1 to 7, comprising a primary system (400), a call manager, and at least one session border controller (300) that has a logic or is connected thereto that allows an indirect signaling of incoming calls to the call manager,
**characterized in that**
the logic of the at least one session border controller (300) allows a direct signaling of incoming calls to the call manager, with the session border controller (300) at least partly taking over the function of the primary system that provides service-specific functions/services as well as a statistical evaluation of the incoming and/or processed calls.

9. A telecommunications system in accordance with claim 8, **characterized in that** the logic of the session border controller (300) has a means for carrying out service-specific functions and/or for evaluating the call statistics and/or processing statistics.

10. A telecommunications system in accordance with claim 8 or claim 9, or
**characterized in that**
an external unit (700) is provided that is linked to at least one session border controller (300) via a transmission control protocol (TCP) for remote configuration.

## Revendications

1. Procédé de fonctionnement d'au moins un centre d'appel, selon lequel des appels téléphoniques entrants provenant d'un réseau VoIP sont signalés par le biais d'au moins un Session Border Controller à au moins un gestionnaire d'appels dans un premier mode de fonctionnement indirectement par le biais d'un système primaire,
**caractérisé en ce que**
dans un second mode de fonctionnement, une voie de communication alternative est configurée, dans laquelle les appels téléphoniques entrants sont signalés par le Session Border Controller directement à l'au moins un gestionnaire d'appels sans intégrer le système primaire, qui fournit des fonctions/services spécifiques au service ainsi qu'une évaluation statistique des appels entrants et/ou traités, le Session Border Controller assumant au moins partiellement la fonctionnalité du système primaire.

2. Procédé selon la revendication 1, **caractérisé en ce que** la voie de communication alternative en cas de défaillance du système primaire est configurée automatiquement ou manuellement.

3. Procédé selon la revendication 1 ou 2, **caractérisé en ce que** la configuration de la voie de communication alternative est stockée dans des fichiers de configuration dans le Session Border Controller ou dans une unité qui est en liaison avec celui-ci.

4. Procédé selon l'une des revendications 1 à 3, **caractérisé en ce que** le Session Border Controller offre des fonctions spécifiques au service et/ou fonctions d'évaluation, par exemple des services d'urgence spécifiques au service et/ou des allocutions de bienvenue spécifiques au service et/ou des horaires d'ouverture spécifiques au service et/ou une attente musicale spécifique au service et/ou une allocution de fin de communication spécifique au service et/ou une évaluation de la statistique d'appel et/ou une évaluation de la statistique de l'agent, pour les appels entrants.

5. Procédé selon l'une des revendications 1 à 4, **caractérisé en ce qu'**une synchronisation de la configuration du système primaire et de la configuration de la voie de communication alternative est effectuée.

6. Procédé selon l'une des revendications 1 à 5, **caractérisé en ce que** le gestionnaire d'appels transfère les appels entrants à un ou plusieurs sites de centre d'appel.

7. Procédé selon l'une des revendications 1 à 6, **caractérisé en ce que** la configuration d'au moins un Session Border Controller se fait par le biais d'un moyen de configuration à distance.

8. Système de télécommunication destiné à exécuter un procédé selon l'une des revendications 1 à 7, comprenant un système primaire (400), un gestionnaire d'appels et au moins un Session Border Controller (300), qui comporte une logique ou qui est en liaison avec celle-ci, qui permet une signalisation indirecte d'appels entrants au gestionnaire d'appels,
**caractérisé en ce que**
la logique de l'au moins un Session Border Controller (300) permet une signalisation directe d'appels entrants au gestionnaire d'appels, le Session Border Controller (300) assumant au moins partiellement la fonctionnalité du système primaire, qui fournit des fonctions/services spécifiques au service ainsi qu'une évaluation statistique des appels entrants et/ou traités.

9. Système de télécommunication selon la revendication 8, **caractérisé en ce que** la logique du Session Border Controller (300) comporte un moyen d'exécution de fonctions spécifiques au service et/ou d'évaluation de la statistique d'appel et/ou de traitement.

10. Système de télécommunication selon la revendication 8 ou 9, **caractérisé en ce qu'**une unité externe (700) est prévue, qui est raccordée à au moins un Session Border Controller (300) par le biais d'un protocole de contrôle de transmission (TCP) pour la configuration à distance.
